(19) Europäisches Patentamt

European Patent Office

Office européen des brevets

(11) **EP 1 337 083 A1**

(12) **EUROPEAN PATENT APPLICATION**

(43) Date of publication:
**20.08.2003 Bulletin 2003/34**

(51) Int Cl.⁷: **H04L 25/06**, H04L 25/02

(21) Application number: **02250969.9**

(22) Date of filing: **13.02.2002**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Agere Systems Limited**
**Ascot, Berkshire SL5 8AD (GB)**

(72) Inventor: **Jensen, Peter Kabell**
**Reading, RG4 8BW (GB)**

(74) Representative: **Williams, David John et al**
**Page White & Farrer,**
**54 Doughty Street**
**London WC1N 2LS (GB)**

(54) **DC offset and channel impulse response estimation**

(57)    There is disclosed a method and apparatus for removing a dc offset from a received signal in linear modulation system channel estimator.

Transmitted signal includes a know set of symbols (midamble). Channel is estimated in dependence on the received signal and the known set of symbols. A known vector associated with the dc offset may be introduced into a matrix defining the known symbols. A single step may estimate the dc offset and the channel based on the least square principle. A further aspect determines whether the symbols in the data part are evenly distributed or not. If the symbols in the data part are evenly distributed, then the mean value of the dc offset is determined in dependence on the data part of the burst in combination with the midamble part of the burst. Otherwise, the mean value of the dc offset is determined in dependence on the midamble part of the burst only.

FIG. 5

## Description

Field of the Invention

The present invention relates to a channel estimator, and particularly but not exclusively to a channel estimator such as is used in a mobile telephone system.

Background of the Invention

In systems where signals are transmitted over a channel, it is often necessary to estimate the channel conditions at the receiver in order to recover the transmitted signals. An example of a system where such channel estimation is necessary is a mobile wireless system, such as a GSM (global system for mobile communications) system or EDGE (Enhanced data for GSM evolution) system.

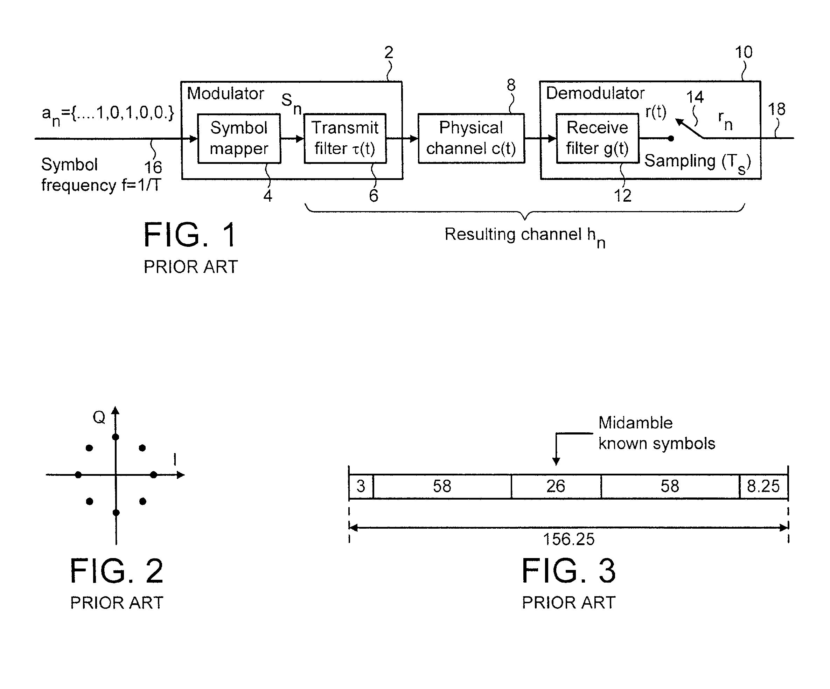

Figure 1 shows the essential components of a linear modulation system. The linear modulation system comprises, on a transmit side, a modulator 2 including a symbol mapper 4 and a transmit filter 6. The modulator 2 modulates a set of symbols, at a symbol frequency of 1/T, on its input 16 for transmission on a physical channel represented by block 8. A demodulator 10, which recovers the transmitted symbols at a receive side of the system, includes a receive filter 12 and a sampling circuit 14, having a sampling frequency $1/T_S$. The sampled symbols are presented on an output 18 at the receive side.

For an EDGE system, using 8-PSK (phase shift keying), the constellation for the transmitted symbols after the symbol mapper 4 is shown in Figure 2, as is known in the art. The sampling time at the receiver, $T_s$ may be smaller than or equal to the symbol time, T.

GSM and EDGE are example of systems where a known set of symbols are transmitted in the data stream from the transmit side in order to facilitate channel estimation at the receive side. Both GSM and EDGE are TDMA systems, which have eight timeslots on each carrier. In each timeslot a sequence of known symbols are placed in the middle of the burst. This sequence of known symbols is often referred to as the mid-amble or the training sequence. Figure 3 shows the known structure of a GSM or EDGE burst, including the mid-amble.

Circuitry for estimating the channel, and hence for recovering the transmitted symbols at the receive side, is well-known in the art. However due to imperfections in the analogue circuitry in the receiver, the received signal may be contaminated with a constant dc component. The dc component is referred to as DC offset.

The DC offset has two detrimental effects on the demodulator. Firstly the channel estimate is perturbed, and secondly the demodulation processing is affected. Both effects can greatly reduce the performance of the demodulator.

Embodiments of the present invention aim to address one or several of the above problems.

Summary of the Invention

According to the present invention there is provided a method of estimating the channel in a linear modulation system comprising: receiving a signal transmitted in the channel, wherein the transmitted signal includes a known set of symbols; and the channel is estimated in dependence on the received signal and the known set of symbols, wherein the method further comprises the step of estimating a dc offset in the received signal by introducing a dc offset parameter into a channel coefficient vector.

The step of estimating the dc offset in the received signal may further comprise introducing a dc offset parameter into the known data symbols. A known vector associated with the dc offset may be introduced into a matrix defining the known symbols.

The received signal, $\bar{r}$, may be defined as:

$$\bar{r} = \bar{\bar{A}}\bar{h} + \bar{n} + dc\bar{\rho}$$

where :

$\bar{h}$ is a vector containing the resulting channel coefficients;

$\bar{\bar{A}}$ is a matrix given by the known data symbols;

$\bar{n}$ is additive white Gaussian noise;

$dc$ is a scalar; and

$\bar{\rho}$ is a known vector.

Furthermore, preferably:

$$\bar{r} = (r_0 \ r_1 \ r_2 \ r_3)^T$$

$$\bar{h} = (h_0 \ h_1)^T$$

$$\bar{\rho} = (\rho_0 \ \rho_1 \ \rho_2 \ \rho_3)^T$$

$$\bar{\bar{A}} = \begin{pmatrix} s_1 & s_0 \\ s_2 & s_1 \\ s_3 & s_2 \\ s_4 & s_3 \end{pmatrix}$$

The dc offset may be removed from the received signal by simplifying the definition of the received signal, $\bar{r}$, as:

$$\bar{r} = \bar{\bar{A}}'\bar{h}' + \bar{n}$$

where :

$\bar{h}$ is a vector containing the resulting channel coefficients, and

$\bar{\bar{A}}$ is a matrix given by the known data symbols.

Preferably:

$$\bar{h}' = (h_0 \ h_1 \ dc)^T; \ and$$

$$\bar{\bar{A}}' = \begin{pmatrix} s_1 & s_0 & \rho_0 \\ s_2 & s_1 & \rho_1 \\ s_3 & s_2 & \rho_2 \\ s_4 & s_3 & \rho_3 \end{pmatrix}.$$

A single step may estimate the dc offset and the channel, and the single step may be defined by:

$$\hat{h}' = \bar{\bar{P}}\bar{r}$$

wherein the matrix $\bar{P}$ is calculated from the known data symbols $s_n$ and the sequence $\rho_n$ by :

$$\bar{\bar{P}} = \left( \bar{\bar{A}}'^H \bar{\bar{A}}' \right)^{-1} \bar{\bar{A}}'^H.$$

A value of the dc offset is preferably calculated.
According to a further aspect of the present invention there is further provided a method of estimating a dc offset of a received signal having a first portion including a known set of symbols and a second portion including a random set of symbols, comprising: determining the variance of the first and second portions; determining the mean dc value of the first and second portions; comparing the variance of the second portion to a threshold value; and in dependence on said comparison using the mean dc value of either the first portion or the first and second portions combined as the dc offset estimate.
The invention also provides in this aspect a circuit for estimating a dc offset of a received signal having a first portion comprising a known set of symbols and a second portion comprising a random set of signals, the circuit comprising: a variance calculator for calculating the variance in the first portion; a variance calculator for calculating the variance in the second portion; a comparator for comparing the variance in the first and second portions to a threshold value; a mean value calculator for determining the mean dc offset value of the first portion; and a mean value calculator for determining the mean dc offset value of the second portion, a summer for adding the mean dc offset values of the first and second portions; wherein the comparator selects the dc offset estimate in dependence on the comparison.

Brief Description of Drawings

For better understanding of the present invention, and as to how the same may be carried into effect, reference will now be made by way of example to the accompanying drawings in which:

Figure 1 shows the essential components of a linear modulation system;

Figure 2 shows an 8-PSK constellation;

Figure 3 shows the structure of an EDGE burst;

Figure 4 is a system model for the purposes of describing the present invention, which model includes the DC offset in the receive side;

Figure 5 shows a first embodiment of the present invention;

Figure 6 illustrates data having five symbols in the mid-amble, two channel coefficients, and four received symbols;

Figure 7 shows a DC offset estimator according to a further embodiment of the present invention; and

Figure 8 shows a DC offset removal circuit according to a still further embodiment of the present invention.

Description of Preferred Embodiments of the Invention

The invention will now be described by way of reference to particular non-limiting examples. In particular the invention is described herein with reference to a GSM/EDGE system. However the invention is not limited to such a system.
The invention can generally be used in systems using linear modulation, and also in systems that can be approximated with linear modulation.

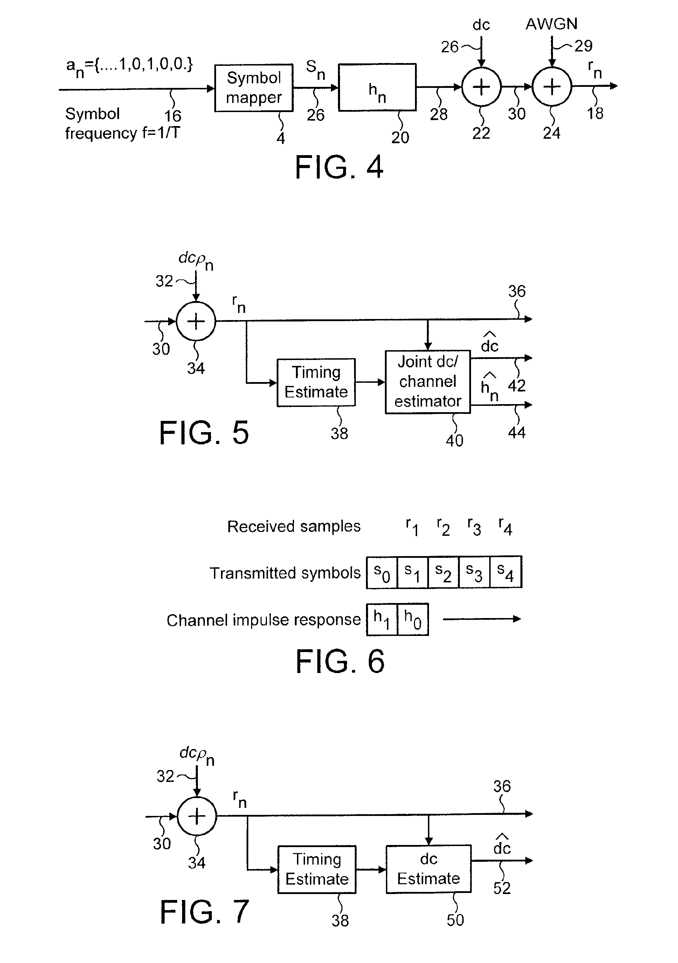

Figure 4 shows a system model for the purposes of describing the present invention, which model includes the DC offset in the receive side. Where appropriate like reference numerals have been used to identify elements which correspond to elements shown in Figure 1. In this model the transmit filter 6, the physical channel 8 and the receive filter 12 of Figure 1, as well as the sampling circuit 14, have been replaced with the sampled channel $h_n$, identified by reference numeral 20. A noise source on signal line 29 is shown as introducing noise at the output of the sampled channel by way of a summer 24. It is assumed that the noise is white and Gaussian distributed (Additive White Gaussian Noise AWGN). The dc offset is shown as introducing a dc offset in the received signal on signal line 26 to the summer 22, also at the output of the sampled channel. Thus in the model shown in Figure 4 the received signal on line 18 is assumed to comprise the demodulated signal corresponding to the transmitted symbols but with added noise and dc offset.

A first embodiment of the present invention is described with reference to Figure 5. In the first embodiment the dc offset and the channel are estimated in the same stage, such that an actual value of the dc offset is not specifically provided.

Referring to Figure 5, the portion of the channel estimator relevant to an understanding of the first embodiment of the present invention is illustrated. The Figure shows a summer 34 having an input on line 30 representing the received signal samples, and an input on line 32 (as discussed further hereinbelow) representing the dc offset introduced by the analogue circuitry in the receiver. The received signal at the output of the summer 34 provides an input to a timing estimator 38, which in turn provides an input to a joint dc/channel estimator 40. The joint dc/channel estimator 40 provides a dc offset on output line 42 and a channel estimate on output line 44.

It should be noted that the timing estimate block 38 is not part of the invention, and is implemented by conventional means. It is assumed that the operation of the timing estimate block 38 is not effected by the presence of the dc offset. The purpose of the timing estimator is to estimate the position of the mid-amble using, for example, correlation techniques.

The joint dc/offset estimator 40 of this embodiment is based on the least square principle. This means that no a *priori* information regarding the channel coefficients or the dc offset is needed. The estimator 40 is a maximum likelihood estimator if the noise is Gaussian. The estimator therefore has good performance for a large range of dc values. Indeed, the dc offset may be many times larger than the signal amplitude. The statistical mean value of the estimated dc offset will be equal to the actual dc offset, and the estimator is said to be unbiased.

It is now assumed that the received signal $\bar{r} = (r_0 \ r_1 \ ... \ r_N)^T$ [T = transposed] can be written as:

$$\bar{r} = \bar{\bar{A}}\bar{h} + \bar{n} + dc\bar{\rho}$$

where :

$\bar{h}$ is a vector containing the resulting channel coefficients;

$\bar{\bar{A}}$ is a matrix given by the known data symbols (i.e. it does not depend on any unknown data symbols). $\bar{\bar{A}}$ represents the data transmitted on the resulting channel $h_n$. If any processing is done to the symbols before they are transmitted on the channel, this processing needs to be included in $\bar{\bar{A}}$. An example of processing that can take place before transmission is multiplication with a sequence such as

$$e^{j\frac{3\pi}{8}n}$$

(also referred to as rotation);

$\bar{n}$ is additive white Gaussian noise (i.e. each element of the vector is an independent Gaussian random variable);

$dc$ is a dc offset scalar; and

$\bar{\rho}$ is a known dc offset vector.

By introducing the dc offset terms into the channel coefficient vector and the matrix containing the known symbols, the received signal can be re-written as:

$$\bar{r} == \bar{\bar{A}}'\bar{h}' + \bar{n} \quad (1) \tag{1}$$

The derivation of equation (1) will be further explained hereinbelow.

An example will now be described to illustrate this embodiment of the present invention. In this example the sampling rate is equal to the symbol rate. If the number of symbols in the mid-amble is five, and the number of channel coefficients two, the number of received symbols that depend only on the mid-amble bits is equal to four. This scenario is illustrated in figure 6. It will be apparent to one skilled in the art, however, that the present invention is not limited to the specific example of Figure 6. The invention is more generally applicable to any number of symbols in the known sequence of data, which need not be a mid-amble. The number of channel coefficients may vary. The sampling rate may differ from the symbol rate.

The corresponding vectors and matrixes can be found to:

$$\bar{r} = (r_0 \ r_1 \ r_2 \ r_3)^T,;$$

$$\bar{h} = (h_0 \ h_1)^T;$$

$$\bar{\rho} = (\rho_0 \ \rho_1 \ \rho_2 \ \rho_3)^T; \text{ and}$$

$$\bar{\bar{A}} = \begin{pmatrix} s_1 & s_0 \\ s_2 & s_1 \\ s_3 & s_2 \\ s_4 & s_3 \end{pmatrix}$$

From this $\bar{h}'$ and $\bar{\bar{A}}'$ can be found to:

$$\bar{h}'=(h_0 \ h_1 \ d_c)^T$$

$$\bar{\bar{A`}} = \begin{pmatrix} s_1 & s_0 & \rho_0 \\ s_2 & s_1 & \rho_1 \\ s_3 & s_2 & \rho_2 \\ s_4 & s_3 & \rho_3 \end{pmatrix}$$

The joint channel/dc estimate $\hat{h}'$ is now given by:

$$\hat{h}' = \bar{\bar{P}}\bar{r} \qquad (2)$$

The matrix $\bar{P}$ is calculated from the known data symbols $s_n$ and the sequence $\rho_n$ by :

$$\bar{\bar{P}}=(\bar{\bar{A}}'^H\bar{\bar{A}}')^{-1}\bar{\bar{A}}'^H (3) \qquad (3)$$

Where H denotes Hermitian conjugated (i.e. complex-conjugated transposed). The inclusion of the vector $\bar{\rho}$ will now be explained.

Regarding the rotation. If the noise and the dc offset is disregarded, then the received signal is given by:

$$\bar{r} = \bar{\bar{A}}\bar{h}$$

where A represents the transmitted signal.

If the transmitted signal is rotated before it is sent, then the rotation needs to be included in the matrix A.

If the signal is de-rotated in the receiver then the rotation and de-rotation cancel each other out and the matrix A represents the original (unrotated) data.

Assuming the data sequence is d(n), the data d(n) is rotated, for example, in the transmitter with exp (n*F), where F is a constant. In the receiver the signal is de-rotated so (ignoring the channel as the system is linear);

$$d(n)*exp(n*F)*exp(-n*F)=d(n)$$

Therefore if the signal is rotated in the transmitter and de-rotated in the receiver then A represents the original data sequence.

However by de-rotating the received sequence the dc offset is modified from being a constant to being a sequence dc(n)=DC*rhp(n). This information therefore needs to be included in the matrix A.

In summary, for dc offset estimation before de-rotation, DC constant => rho(n)=1.

The transmitted signal is rotated, i.e. A represents the transmitted signal rotated.

For DC offset estimation after de-rotation, the DC signal is modified by the rotation rho(n)= exp(-n*F).

The rotation and de-rotation cancel each other out, i.e. A represents the original data.

In GSM/EDGE the signal is rotated before it is transmitted on the channel. The signal therefore needs to be de-rotated in the receiver.

The matrix $\bar{\bar{A}}$ will not contain any terms relating to the rotation.

This embodiment of the invention provides a technique in which the dc value is not consistently under- or over-estimated, because the mean value of the dc estimate equals the actual value of the dc offset. The accuracy in the determination of the dc offset is achieved since the estimator is based on known symbols (the mid-amble). The estimator also works well for a very large range of dc values.

This embodiment of the invention requires some modification to a known channel estimator, as the conventional channel estimator block is replaced by a joint channel estimator and dc offset estimator.

A second embodiment for implementing the present invention is described with reference to Figure 7. In the second embodiment the dc offset value is estimated and then subtracted from the signal before the channel estimation.

Referring to Figure 7, the portion of the channel estimator relevant to an understanding of the second embodiment of the present invention is illustrated. Like reference numerals are used to identify elements corresponding to elements of Figure 5. The Figure shows a summer 34 having an input on line 30 representing the received signal samples, and an input on line 32 representing the dc offset and the dc offset vector introduced by the analogue circuitry in the receiver. The received signal at the output of the summer 34 provides an input to the timing estimator 38, which in turn provides an input to a dc estimate block 50. The dc estimate block 50 provides a dc offset value on output line 52.

In this embodiment, the same assumptions are made as were made in relation to the first embodiment to formulate equation (1). An example will be now described to illustrate this second embodiment of the present invention. In this example the scenario is used as was used to illustrate the first embodiment, which is illustrated with reference to Figure 6.

For this embodiment, rather than defining the joint channel/dc estimate as defined in equation (2) above, the DC offset estimate *dc* can now be calculated as:

$$\hat{dc} = \overline{\overline{Q}}^T \overline{r} \qquad (4)$$

The vector $\overline{Q}$ is calculated from the known data symbols $s_n$ and the sequence $\rho_n$.

The algorithm for calculating the vector is as follows. Calculate the matrix product

$$\overline{\overline{P}} \approx \left( \overline{\overline{A}`}^H \overline{\overline{A}`} \right)^{-1} \overline{\overline{A}`}^H$$

where H denotes Hermitian conjugated (i.e. complex-conjugated transposed). $\overline{Q}$ is now given by the last column in $\overline{\overline{P}}$.

As discussed in relation to the first example, in GSM/EDGE the signal is rotated before it is transmitted on the channel. The signal therefore needs to be de-rotated in the receiver. If the dc offset estimation is done before the de-rotation then the elements in $\overline{\rho}$ will all be one, and the rotation will need to be included in the matrix $\overline{\overline{A}}$. However if the DC offset estimation is done after the de-rotation then the DC offset is modified by the de-rotation and $\overline{\rho}$ will be equal to the de-rotation sequence. The matrix $\overline{A}$ will not contain any terms relating to the rotation.

This embodiment of the invention provides a technique in which the mean value of the estimator provides the actual value of the dc offset. The estimator is again based on the known symbols in the mid-amble. The dc offset can advantageously be subtracted prior to channel estimation.

This embodiment of the invention provides an advantage over the first embodiment in so far as a normal channel estimator can be used, as the dc offset is calculated in a distinct block. The dc offset estimate block can be used to feed a conventional channel estimator.

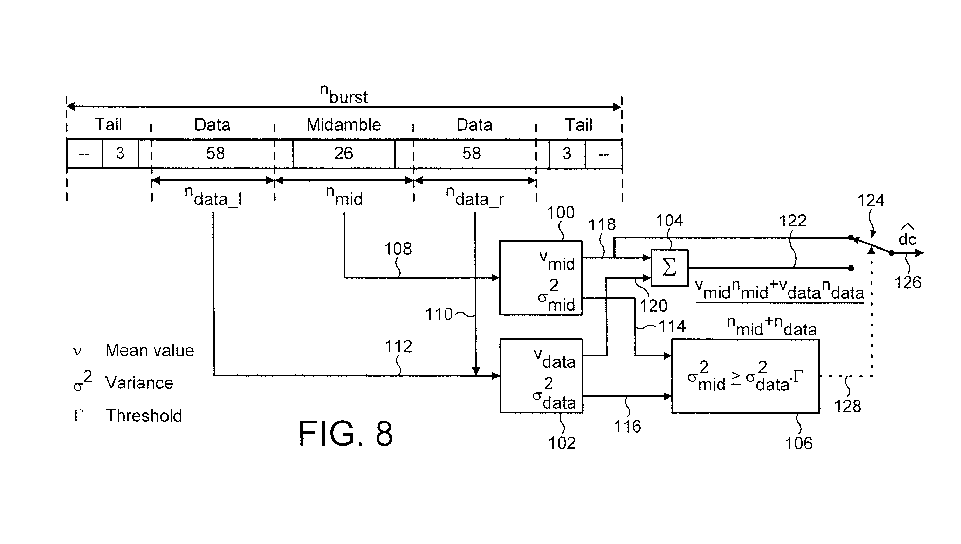

In the embodiments of the invention so far described, in order to remove the dc offset from the received signal it is necessary for the transmitted symbols to be known. This information is provided by the mid-amble. In a further variation of the present invention, described hereinafter with reference to Figure 8, the known symbols in the mid-amble are not used.

Referring to Figure 8, there is shown a block diagram of a dc offset removal circuit according to this further embodiment of the invention.

For GSM/EDGE a burst is 156.25 symbols long as shown in Figure 2. When the received signal is sampled, the sampling rate $T_s$ may be equal to or smaller than the symbol rate T. In addition the mobile will normally receive several copies of the transmitted burst due to multi-path propagation. The received circuitry in the mobile, in accordance with known techniques, adjusts the start time and length of the burst acquisition, so that all the energy from the data bits is captured. The total number of samples acquired is called $n_{burst}$. This means that the acquisition time is adjusted so that the transmitted bits are placed approximately in the centre of the captured burst as shown in figure 8.

This embodiment of the present invention determines the dc offset by determining the mean value of the dc offset in the received signal. Advantageously, the invention calculates such mean value in dependence on dynamically selected portions of the received signal as discussed hereinbelow.

The mid-amble of the burst is chosen to have an even distribution of symbols. Thus the mean dc offset of the mid-amble represents a good approximation of the dc offset for the mid-amble. However this is not ideal for determining the mean dc offset for the whole burst, because it represents only a small portion of the burst. Using only a small number of samples to estimate the dc offset is not good as the thermal noise is poorly suppressed. The assumption is that the mean value of the thermal noise is zero. By using a lot of samples the thermal noise is suppressed.

In accordance with this embodiment of the present invention, there is determined the variance in the data parts of the received signal to determine whether the symbols in the data part are evenly distributed or not.

If the symbols in the data part are evenly distributed, then the mean value of the dc offset is determined in dependence on the data part of the burst in combination with the mid-amble part of the burst, thereby providing a more representative sample.

If the symbols in the data part are not evenly distributed, then the mean value of the dc offset is determined in dependence on the mid-amble part of the burst only.

Referring to Figure 8, the mid-amble variance and mean value calculator block 100 receive the mid-amble on line 108. The data variance and mean value calculator block 102 receives the two parts of the data on lines 110 and 112.

The comparator block 106 compares the variance values from the blocks 100 and 102 respectively output on the lines 114 and 116. The comparator block 106 determines whether the variance of the mid-amble symbols is greater than or equal to the variance of the data symbols. The output of the comparator block 128 controls the switch 124 as further discussed hereinbelow.

The mean values determined by each of the blocks 100 and 102 is output on lines 118 and 120 respectively. The mean value of the mid-amble is provided as a first input to the switch 124. The mean values of both the mid-amble and the data are provided on lines 118 and 120 to the summer 104, which generates a summed mean value on line 122 which forms a second input to the switch 124.

Thereafter, in dependence on the output of the comparator block 106, the switch provides on its output 126 a mean value corresponding to either the mean value of the mid-amble or the mean value of the mid-amble and the data.

In the comparator block 106 the comparison between the mean values of the midamble and the data is based upon a threshold value. The threshold value may be selected in dependence on the implementations requirements of the application.

A more detailed analysis of the operation of the arrangement of Figure 8 is given hereinbelow.

The mean value $v_{mid}$ and variance $\sigma^2_{mid}$ of the samples predominantly originating from the midamble bits are calculated in the block 100. The number of samples used for $v_{mid}$ and $\sigma^2_{mid}$ is equal to $n_{mid}$. Likewise the mean value $v_{data}$ and variance $\sigma^2_{data}$ corresponding to samples originating predominantly from the data bits are calculated in the block 102. The number of samples used for $v_{data}$ and $\sigma^2_{data}$ is equal to $n_{data} = n_{data\_l} + n_{data\_r}$. In order to determine if the data samples have a large dc value $\sigma^2_{mid}$ is compared with $\sigma^2_{data}$ in block 106.

If $\sigma^2_{mid} \geq \sigma^2_{data} \cdot \Gamma$ (where $\Gamma$ is a real constant) then the dc offset value is defined as:

$$\hat{dc} = v_{mid}$$

otherwise the dc offset value is defined as:

$$dc = \frac{V_{mid}n_{mid} + V_{data}n_{data}}{n_{mid} + n_{data}}$$

The algorithm may be applied on the complex data or on the real and imaginary parts of the data separately.

This embodiment of the invention provides many advantages. For example, if the number of samples used to calculate the dc value is large, as it is when the data part of the burst is used, the random data and the thermal noise is attenuated efficiently. However if the transmitted burst contains a large dc value, the estimator may fail and it may not be possible to decode the burst. The present embodiment avoids such problems by selecting only the mid-amble samples in such a case. As such, this embodiment of the invention adaptively selects the window size and provides protection against data patterns that have a large dc value.

The present invention has been described herein by way of reference to specific, non-limiting examples. It should be understood that the invention is more generally applicable than the examples given herein. One skilled in the art will understand the broader applicability of the present invention. The scope of the invention is defined by the appended claims.

## Claims

1. A method of estimating the channel in a linear modulation system comprising: receiving a signal transmitted in the channel, wherein the transmitted signal includes a known set of symbols; and the channel is estimated in dependence on the received signal and the known set of symbols, wherein the method further comprises the step of estimating a dc offset in the received signal by introducing a dc offset parameter into a channel coefficient vector.

2. A method according to claim 1, wherein a scalar value corresponding to the dc offset is introduced into the channel coefficient vector.

3. A method according to claim 2, wherein the dc offset estimation is carried out before de-rotation of the received signal.

4. A method according to claim 1 or claim 2 wherein the dc offset estimation is carried out after de-rotation of the received signal.

5. A method according to any preceding claim wherein the received signal, $\bar{r}$, is defined as:

$$\bar{r} = \bar{\bar{A}}\bar{h} + \bar{n} + dc\bar{\rho}$$

where :

$\bar{h}$ is a vector containing the resulting channel coefficients;

$\bar{\bar{A}}$ is a matrix given by the known data symbols;

$\bar{n}$ is additive white Gaussian noise;

$dc$ is a scalar; and

$\bar{\rho}$ is a known vector.

6.  A method according to any one of claims 1 to 5 wherein the channel is estimated, and the dc offset estimated, in a single step.

7.  A method according to claim 6 wherein the dc offset is calculated by:

$$\hat{dc}=\bar{Q}^{T}\bar{r}$$

wherein the vector $\bar{Q}$ is calculated from the known data symbols $s_n$ and the sequence $\rho_n$.

8.  A method of estimating a dc offset of a received signal having a first portion including a known set of symbols and a second portion including a random set of symbols, comprising: determining the variance of the first and second portions; determining the mean dc value of the first and second portions; comparing the variance of the second portion to a threshold value; and in dependence on said comparison using the mean dc value of either the first portion or the first and second portions combined as the dc offset estimate.

9.  A circuit for estimating a dc offset of a received signal having a first portion comprising a known set of symbols and a second portion comprising a random set of signals, the circuit comprising: a variance calculator for calculating the variance in the first portion; a variance calculator for calculating the variance in the second portion; a comparator for comparing the variance in the first and second portions to a threshold value; a mean value calculator for determining the mean dc offset value of the first portion; and a mean value calculator for determining the mean dc offset value of the second portion, a summer for adding the mean dc offset values of the first and second portions; wherein the comparator selects the dc offset estimate in dependence on the comparison.

EP 1 337 083 A1

$a_n = \{....1,0,1,0,0.\}$

Symbol
frequency f=1/T

16

**Modulator** 2

$S_n$

Symbol
mapper
4

Transmit
filter $\tau(t)$
6

Physical
channel c(t)
8

**Demodulator** 10

Receive
filter g(t)
12

r(t)

14

$r_n$

18

Sampling ($T_s$)

Resulting channel $h_n$

# FIG. 1
PRIOR ART

Q

I

# FIG. 2
PRIOR ART

Midamble
known symbols

| 3 | 58 | 26 | 58 | 8.25 |
|---|----|----|----|------|

156.25

# FIG. 3
PRIOR ART

FIG. 4

FIG. 5

FIG. 6

FIG. 7

FIG. 8

EP 1 337 083 A1

**European Patent Office**

# EUROPEAN SEARCH REPORT

Application Number

EP 02 25 0969

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 01 31867 A (NOKIA NETWORKS OY ;PIIRAINEN OLLI (FI)) 3 May 2001 (2001-05-03) * page 2, line 14 – page 3, line 2 * * page 4, paragraph 2 * * page 4, paragraph 3 * * page 8, line 20 – last line * * page 9, line 12 – line 18 * * page 10, line 17 – page 11, line 12 * * page 12, line 30 – page 13, line 3 * * page 13, line 18 – line 27 * | 1-7 | H04L25/06 H04L25/02 |
| X | WO 00 69023 A (ANALOG DEVICES INC) 16 November 2000 (2000-11-16) * page 5, line 19 – page 6, line 3 * * page 9, line 18 – line 28 * * page 11, line 19 – line 21 * * page 14, line 1 – line 4 * | 1-3,5,6 | |
| A | WO 01 03396 A (ERICSSON TELEFON AB L M) 11 January 2001 (2001-01-11) * page 4, line 11 – line 14 * * page 4, line 22 – line 25 * * page 7, line 18 – page 8, line 5 * | 8,9 | TECHNICAL FIELDS SEARCHED (Int.Cl.7) H04L |

The present search report has been drawn up for all claims

| Place of search | Date of completion of the search | Examiner |
|---|---|---|
| THE HAGUE | 2 December 2002 | Moreno, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

12

European Patent

Office

**Application Number**

EP 02 25 0969

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

European Patent Office

**LACK OF UNITY OF INVENTION
SHEET B**

Application Number

EP 02 25 0969

The Search Division considers that the present European patent application does not comply with the requirements of unity of invention and relates to several inventions or groups of inventions, namely:

1. Claims: 1-7

   Joint estimation of channel and DC offset.

2. Claims: 8,9

   Protection against data patterns with large DC value.

## ANNEX TO THE EUROPEAN SEARCH REPORT
## ON EUROPEAN PATENT APPLICATION NO.

EP 02 25 0969

This annex lists the patent family members relating to the patent documents cited in the above-mentioned European search report.
The members are as contained in the European Patent Office EDP file on
The European Patent Office is in no way liable for these particulars which are merely given for the purpose of information.

02-12-2002

| Patent document cited in search report | | Publication date | Patent family member(s) | | Publication date |
|---|---|---|---|---|---|
| WO 0131867 | A | 03-05-2001 | WO<br>AU<br>EP | 0131867 A1<br>1158300 A<br>1224781 A1 | 03-05-2001<br>08-05-2001<br>24-07-2002 |
| WO 0069023 | A | 16-11-2000 | EP<br>WO | 1177602 A2<br>0069023 A2 | 06-02-2002<br>16-11-2000 |
| WO 0103396 | A | 11-01-2001 | US<br>AU<br>WO<br>EP | 6449320 B1<br>6152600 A<br>0103396 A2<br>1195033 A2 | 10-09-2002<br>22-01-2001<br>11-01-2001<br>10-04-2002 |

EPO FORM P0459

For more details about this annex : see Official Journal of the European Patent Office, No. 12/82